# EUROPEAN PATENT APPLICATION

(11) **EP 4 123 921 A1**
(43) Date of publication of application: **25.01.2023**
(21) Application number: 21795372.8
(22) Date of filing: 21.04.2021
(51) Int. Cl.: H04B 7/185, H04B 17/309

(54) **SATELLITE COMMUNICATION METHOD AND APPARATUS**

(30) Priority: 27.04.2020 CN 202010345262
(71) Applicant: Huawei Technologies Co., Ltd., Longgang Shenzhen, Guangdong 518129 (CN)
(72) Inventor: QIAO, Yunfei, Shenzhen, Guangdong 518129 (CN); WANG, Yu, Shenzhen, Guangdong 518129 (CN); DU, Yinggang, Shenzhen, Guangdong 518129 (CN)
(74) Representative: Huawei European IPR
(86) International application number: PCT/CN2021/088670
(87) International publication number: WO 2021/218736

(57) **Abstract**

This application provides a satellite communication method and apparatus, to reduce a connection establishment delay. The method includes: A first satellite receives at least one piece of measurement information sent by user equipment UE, where the at least one piece of measurement information is in a one-to-one correspondence with at least one satellite, and each piece of measurement information indicates signal quality of a detection signal sent by a corresponding satellite; the first satellite determines at least one second satellite from the at least one satellite based on the at least one piece of measurement information, where signal quality of a detection signal sent by the second satellite meets a first preset condition; the first satellite sends first information to the UE, where the first information is used for communication between the UE and the second satellite, and the first information includes an identifier of the second satellite; and/or the first satellite sends second information to the second satellite, where the second information is used for communication between the second satellite and the UE, and the second information includes an identifier of the UE.

## Description

This application claims priority to Patent Application No. 202010345262.7, filed with the China National Intellectual Property Administration on April 27, 2020 and entitled "SATELLITE COMMUNICATION METHOD AND APPARATUS", which is incorporated herein by reference in its entirety.

### TECHNICAL FIELD

This application relates to the communication field, and more specifically, to a satellite communication method and apparatus.

### BACKGROUNDP

With development of information technologies, higher efficiency, mobility, diversity, and the like of communication are urgently required. Currently, a development focus in the communication system field is global mobile communication (Global System for Mobile Communications, GSM), and an important part of the global mobile communication is satellite communication. Satellite communication has advantages such as a long communication distance, a large coverage area, and flexible networking, and can provide services for various mobile terminals and fixed terminals.

Due to high-speed movement of a satellite node, a user terminal in a connected state needs to be frequently handed over between different satellites, to ensure service continuity. However, a process of establishing a communication connection between the user terminal and the satellite takes a certain amount of time, and frequent handover causes a delay.

### SUMMARY

This application provides a satellite communication method and apparatus, to reduce a connection establishment delay.

According to a first aspect, a satellite communication method is provided, including: A first satellite receives at least one piece of measurement information sent by user equipment UE, where the at least one piece of measurement information is in a one-to-one correspondence with at least one satellite, and each piece of measurement information indicates signal quality of a detection signal sent by a corresponding satellite; the first satellite determines at least one second satellite from the at least one satellite based on the at least one piece of measurement information, where signal quality of a detection signal sent by the second satellite meets a first preset condition; the first satellite sends first information to the UE, where the first information is used for communication between the UE and the second satellite, and the first information includes an identifier of the second satellite; and/or the first satellite sends second information to the second satellite, where the second information is used for communication between the second satellite and the UE, and the second information includes an identifier of the UE.

Based on the foregoing technical solution, the first satellite that establishes a connection to the UE may determine, based on measurement information detected by the UE, the at least one second satellite whose signal quality meets the first preset condition, and enable the at least one second satellite to prepare in advance for communication with the UE. When the UE initiates a random access request to the second satellite, a connection may be quickly established, and a delay may be reduced.

In a possible implementation, the first information or the second information is specifically used for synchronization or authentication and authorization between the second satellite and the UE.

In a possible implementation, the first preset condition includes: Receive power is greater than or equal to a first threshold; and/or a signal-to-noise ratio is greater than or equal to a second threshold.

In a possible implementation, that the first satellite determines at least one second satellite from the at least one satellite based on the at least one piece of measurement information includes: The first satellite determines the at least one second satellite from the at least one satellite based on the at least one piece of measurement information and at least one piece of the following information: load information of each satellite of the at least one satellite, an ephemeris of each satellite of the at least one satellite, top-crossing time information of each satellite of the at least one satellite relative to the UE, and location information of each satellite of the at least one satellite relative to the UE.

The first satellite determines the second satellite based on the signal quality and the load information that are indicated in the measurement information, to balance a network load. In addition, the location information, top-crossing time, or the ephemeris of the satellite are considered, to determine that a satellite that communicates with the UE for long time is the second satellite.

In a possible implementation, the method further includes: The first satellite sends third information to the second satellite, where the third information indicates a first time-frequency resource used when the first satellite communicates with the UE.

In a possible implementation, the method further includes: The first satellite receives fourth information sent by the second satellite, where the fourth information indicates an idle time-frequency resource of the second satellite; and the first satellite determines the first time-frequency resource from the idle time-frequency resource.

In a possible implementation, the at least one second satellite is determined in a first time period, the second satellite belongs to a cooperative satellite set of the UE, and the first information and/or the second information are/is used for communication between the UE and each satellite in the cooperative satellite set. The method further includes: In a second time period, if signal quality of a detection signal sent by a third satellite other than the cooperative satellite set meets the first preset condition, the first satellite adds the third satellite to the cooperative satellite set; and in a third time period, if signal quality of a detection signal sent by a fourth satellite in the cooperative satellite set does not meet the first preset condition, the first satellite excludes the fourth satellite from the cooperative satellite set.

According to a second aspect, a satellite communication method is provided, including: User equipment (UE) receives a plurality of detection signals, where the plurality of detection signals are in a one-to-one correspondence with a plurality of satellites, and each detection signal is sent by a corresponding satellite; and the UE sends at least one piece of measurement information to a first satellite, where the at least one piece of measurement information is in a one-to-one correspondence with at least one first detection signal, and each piece of measurement information indicates signal quality of a corresponding first detection signal; and the UE receives first information sent by the first satellite, where the first information includes an identifier of a second satellite, the first information is used for communication between the UE and the second satellite, and signal quality of a first detection signal sent by the second satellite meets a first preset condition.

In a possible implementation, the first information is specifically used for synchronization or authentication and authorization between the second satellite and the UE.

In a possible implementation, a quantity of the first detection signals is the same as a quantity of the plurality of detection signals.

In a possible implementation, the first detection signal is a detection signal whose signal quality meets a second preset condition in the plurality of detection signals.

In a possible implementation, the second preset condition includes: Receive power is greater than or equal to a third threshold; and/or a signal-to-noise ratio is greater than or equal to a fourth threshold.

According to a third aspect, a satellite communication method is provided, including: A second satellite sends a detection signal to user equipment (UE); and the second satellite receives second information sent by a first satellite, where the second information is used for communication between the second satellite and the UE, the second information includes an identifier of the UE, and the second information is sent by the first satellite after the first satellite determines that signal quality of the detection signal sent by the second satellite meets a first preset condition.

In a possible implementation, the method further includes: The second satellite receives third information sent by the first satellite, where the third information indicates a first time-frequency resource used when the first satellite communicates with the UE; and the second satellite communicates with the UE by using the first time-frequency resource.

In a possible implementation, the method further includes: The second satellite sends fourth information to the first satellite, where the fourth information indicates an idle time-frequency resource of the second satellite, so that the first satellite determines the first time-frequency resource from the idle time-frequency resource.

According to a fourth aspect, a communication apparatus is provided, including: a communication interface, configured to receive at least one piece of measurement information sent by user equipment UE, where the at least one piece of measurement information is in a one-to-one correspondence with at least one satellite, and each piece of measurement information indicates signal quality of a detection signal sent by a corresponding satellite; and a logic circuit, configured to determine at least one second satellite from the at least one satellite based on the at least one piece of measurement information, where signal quality of a detection signal sent by the second satellite meets a first preset condition; the communication interface is further configured to send first information to the UE, where the first information is used for communication between the UE and the second satellite, and the first information includes an identifier of the second satellite; and/or the communication interface is further configured to send second information to the second satellite, where the second information is used for communication between the second satellite and the UE, and the second information includes an identifier of the UE.

In a possible implementation, the first information or the second information is specifically used for synchronization or authentication and authorization between the second satellite and the UE.

In a possible implementation, the first preset condition includes: Receive power is greater than or equal to a first threshold; and/or a signal-to-noise ratio is greater than or equal to a second threshold.

In a possible implementation, the logic circuit is specifically configured to determine the at least one second satellite from the at least one satellite based on the at least one piece of measurement information and at least one piece of the following information: load information of each satellite of the at least one satellite, an ephemeris of each satellite of the at least one satellite, top-crossing time information of each satellite of the at least one satellite relative to the UE, and location information of each satellite of the at least one satellite relative to the UE.

In a possible implementation, the communication interface is further configured to send third information to the second satellite, where the third information indicates a first time-frequency resource used when the communication interface communicates with the UE.

In a possible implementation, the communication interface is further configured to receive fourth information sent by the second satellite, where the fourth information indicates an idle time-frequency resource of the second satellite; and the logic circuit is further configured to determine the first time-frequency resource from the idle time-frequency resource.

In a possible implementation, the at least one second satellite is determined in a first time period, the second satellite belongs to a cooperative satellite set of the UE, and the first information and/or the second information are/is used for communication between the UE and each satellite in the cooperative satellite set; in a second time period, if signal quality of a detection signal sent by a third satellite other than the cooperative satellite set meets the first preset condition, the logic circuit is further configured to add the third satellite to the cooperative satellite set; and in a second time period, if signal quality of a detection signal sent by a fourth satellite in the cooperative satellite set does not meet the first preset condition, the logic circuit is further configured to exclude the fourth satellite from the cooperative satellite set.

According to a fifth aspect, a communication apparatus is provided, including: a communication interface, configured to receive a plurality of detection signals, where the plurality of detection signals are in a one-to-one correspondence with a plurality of satellites, and each detection signal is sent by a corresponding satellite; the communication interface is further configured to send at least one piece of measurement information to a first satellite, where the at least one piece of measurement information is in a one-to-one correspondence with at least one first detection signal, and each piece of measurement information indicates signal quality of a corresponding first detection signal; and the communication interface is further configured to receive first information sent by the first satellite, where the first information includes an identifier of a second satellite, the first information is used for communication between UE and the second satellite, and signal quality of a first detection signal sent by the second satellite meets a first preset condition.

In a possible implementation, the first information is specifically used for synchronization or authentication and authorization between the second satellite and the UE.

In a possible implementation, a quantity of the first detection signals is the same as a quantity of the plurality of detection signals.

In a possible implementation, the first detection signal is a detection signal whose signal quality meets a second preset condition in the plurality of detection signals.

In a possible implementation, the second preset condition includes: Receive power is greater than or equal to a third threshold; and/or a signal-to-noise ratio is greater than or equal to a fourth threshold.

According to a sixth aspect, a computer-readable storage medium is provided, where the computer-readable medium stores a computer program, and when the computer program runs on a computer, the computer is enabled to perform the method in any one of the first aspect or the possible implementations of the first aspect.

According to a seventh aspect, a computer-readable storage medium is provided, where the computer-readable medium stores a computer program, and when the computer program runs on a computer, the computer is enabled to perform the method in any one of the second aspect or the possible implementations of the second aspect.

### BRIEF DESCRIPTION OF DRAWINGS

FIG. 1 is a schematic diagram of handover of UE between different cells of a same satellite according to an embodiment of this application;
FIG. 2 is a schematic diagram of handover of UE between cells of different satellites according to an embodiment of this application;
FIG. 3 is a schematic diagram of a typical application scenario of a satellite network according to an embodiment of this application;
FIG. 4 is an interaction flowchart of a satellite communication method according to an embodiment of this application;
FIG. 5 is a schematic diagram of a time sequence relationship between a detection signal and a synchronization signal according to an embodiment of this application;
FIG. 6 is a schematic block diagram of a communication apparatus according to an embodiment of this application;
FIG. 7 is a schematic block diagram of another communication apparatus according to an embodiment of this application; and
FIG. 8 is a schematic block diagram of a network device according to an embodiment of this application.

### DESCRIPTION OF EMBODIMENTS

The following describes technical solutions of this application with reference to accompanying drawings.

Embodiments of this application may be applied to various communication systems, for example, a wireless local area network (Wireless Local Area Network, WLAN) system, a narrowband Internet of Things (Narrow Band-Internet of Things, NB-IoT) system, a global mobile communication system, an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division synchronous code division multiple access (Time Division-Synchronization Code Division Multiple Access, TD-SCDMA) system, a long term evolution (Long Term Evolution, LTE) system, satellite communication, and a 5th generation (5G) system, and a new communication system emerging in the future.

A terminal device in embodiments of this application may include various handheld devices, vehicle-mounted devices, wearable devices, or computing devices that have a wireless communication function, or other processing devices connected to a wireless modem. A terminal may be a mobile station (Mobile Station, MS), a subscriber unit (subscriber unit), user equipment (user equipment, UE), a cellular phone (cellular phone), a smartphone (smart phone), a wireless data card, a personal digital assistant (Personal Digital Assistant, PDA) computer, a tablet computer, a wireless modem (modem), a handheld (handset) device, a laptop computer (laptop computer), a machine type communication (Machine Type Communication, MTC) terminal, or the like.

With development of information technologies, more urgent requirements are imposed on high efficiency, mobility, diversity, and the like of communication. Currently, a development focus in the communication system field is global mobile communication GSM, and an important part of the global mobile communication is satellite communication. Satellites play an irreplaceable role in some important fields such as space communication, aeronautical communication, maritime communication, and military communication. Satellite communication has advantages such as a long communication distance, a large coverage area, and flexible networking, and can provide services for various mobile terminals and fixed terminals.

The 3rd Generation Partnership Project (3rd Generation Partnership Project, 3GPP) standard organization releases 5G technical standards to study on space-ground integrated communication technologies. A main purpose is to integrate conventional 5G standards and satellite communication technologies to achieve full coverage around the world. Currently, the study is initiated, and study on an integrated 5G-satellite architecture is carried out.

A current network architecture is network-centric, that is, resource scheduling is performed by using a base station as a center. Each cell independently schedules time-frequency resources. The time-frequency resources are allocated to cells in a half-static configuration mode. From a perspective of a cell, each cell works independently. From a perspective of UE, the UE can use only a resource of a serving cell, and can communicate with the cell only by using an uplink and a downlink in a same cell. In the network-centric communication system mode, there are following problems: poor cell edge performance in an intra-frequency networking scenario, handover required in a UE movement process, load imbalance, and the like.

In intra-frequency networking, interference exists at a cell edge (cell edge). Neighboring cells are superimposed at the cell edge. This results in great interference and hinders improvement of throughput at the cell edge.

Handover is a process in which the UE changes a cell connection during communication. Due to high-speed movement of a non-geostationary orbit (Non-geostationary orbit, NGEO) satellite node, a user terminal in a connected state needs to be frequently handed over between different satellite cells, to ensure service continuity. Typical satellite cell handover scenarios include intra-satellite cell handover and inter-satellite cell handover.

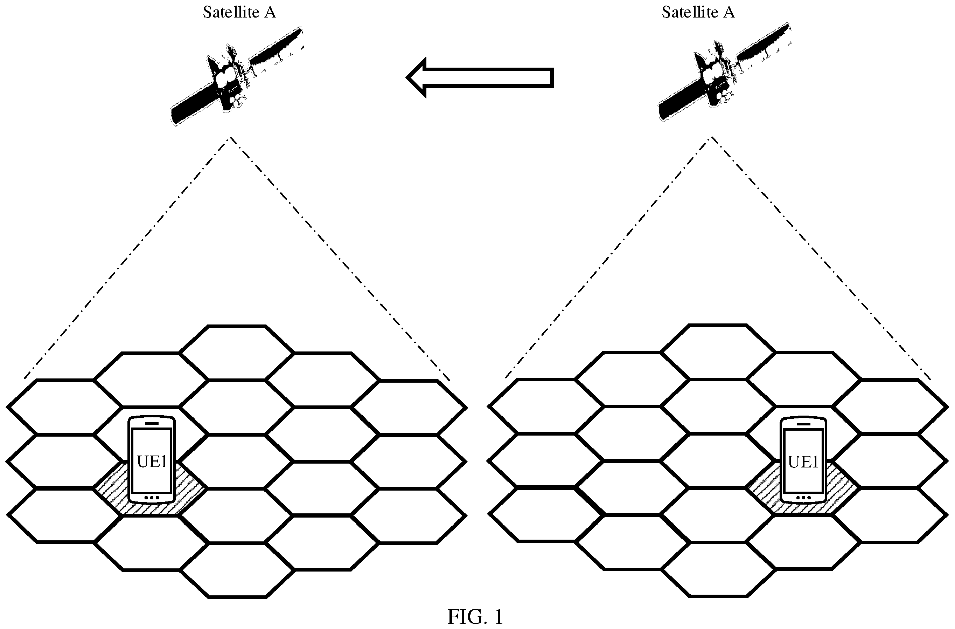

(1) The intra-satellite cell handover refers to handover of UE between different cells of a same satellite. As shown in FIG. 1, a satellite A moves from right to left, and the UE needs to perform the intra-satellite cell handover.

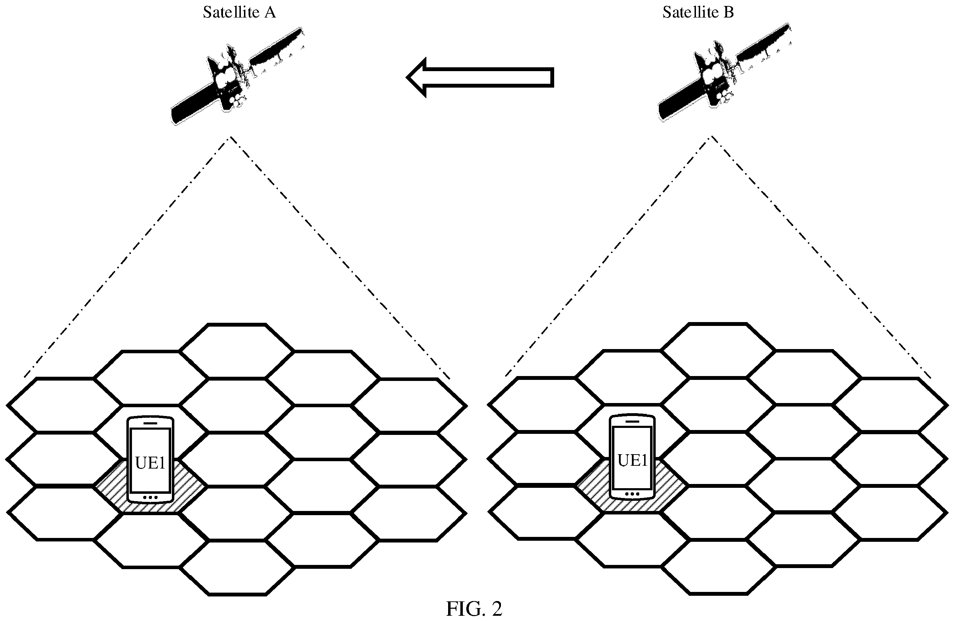

(2) The inter-satellite cell handover refers to handover of UE between cells of different satellites. As shown in FIG. 2, a low-earth orbit (Low Earth Orbit, LEO) satellite moves from right to left, and the UE needs to perform the inter-satellite cell handover, to be specific, handover from a cell of a satellite A to a cell of a satellite B.

Load balancing is also an important research direction in mobile networks. Especially in a satellite network, UEs are usually unevenly distributed. Some cells camp on a large quantity of UEs while some cells camp on a small quantity of UEs. As a result, a load of the entire network may be unevenly distributed.

A coordinated multipoint (Coordinated Multiple Point, CoMP) technology is one of methods for improving spectral efficiency at a cell edge in LTE. Inter-cell interference can be changed into wanted signals by using the CoMP technology, so that throughput at the cell edge is improved. In this technology, information (including channel state information, scheduling information of a cell, user data information, and the like) is shared between different cells, to implement coordination of a plurality of neighboring cells.

The CoMP technology is still based on a conventional cellular structure, and a user always performs data channel transmission communication with a cluster of coordinating cells determined in advance in a network. A control channel is transmitted and received by a serving cell of the user instead of by using the CoMP technology. CoMP coordination areas have the following characteristics: There are no non-overlapping coordination areas, the coordination areas have a half-static configuration, and small-scale coordination is implemented in the CoMP coordination areas. UEs need to be scheduled in a centralized manner in the coordination areas. There is no information exchange between base stations in different coordination areas. When a cell is in a coordination area, if the cell participates in other coordination areas, scheduling complexity is high. As a result, the CoMP coordination areas cannot overlap. Due to conventional hardware limitations, performance gains, feedback overheads, and scheduling complexity, a coordination area generally includes two to three cells.

However, the CoMP technology also has some problems: An edge of a CoMP coordination cluster has poor performance, a handover process is required when a serving cell changes, and CoMP coordination is not transparent to the UEs. At the edge of the CoMP coordination cluster, a receive signal-to-noise ratio is low, and interference is strong. Therefore, performance at the edge is poor.

Embodiments of this application provide a satellite communication method, so that when a user terminal is handed over between different satellites, a delay caused by communication connection establishment can be reduced.

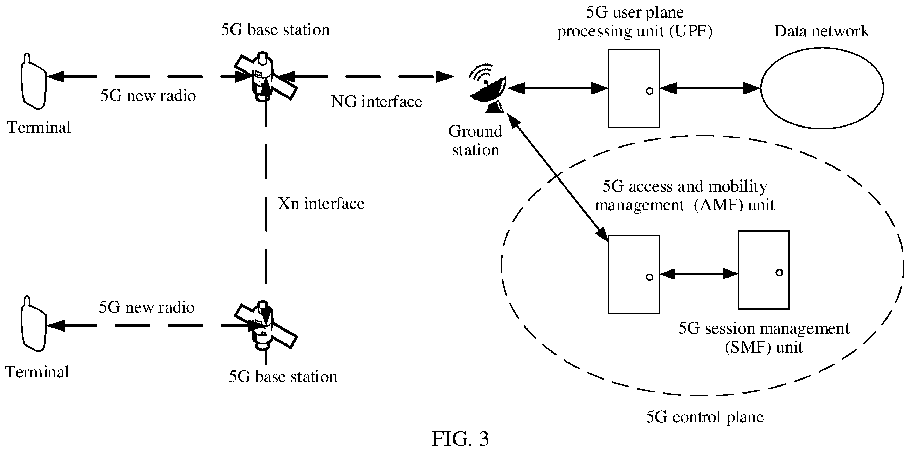

This application belongs to a category of satellite communication. 3GPP members integrate satellite communication and 5G technologies, and provide a typical network application architecture. As shown in FIG. 3, terrestrial mobile terminal UE accesses a network through 5G new radio, and a 5G base station is deployed on a satellite and is connected to a terrestrial core network through a radio link. In addition, there are radio links between satellites to implement signaling exchange and user data transmission between base stations. Network elements in FIG. 3 and interfaces of the network elements are described as follows:

Terminal: A terminal refers to mobile devices that support 5G new radio such as a mobile phone and a tablet computer. The terminal can access a satellite network through an air interface and initiate a service such as a call and accessing the Internet.

5G base station: A 5G base station provides radio access services, schedules radio resources to an access terminal, and provides reliable wireless transmission protocols and data encryption protocols.

5G core network: A 5G core network provides services such as user access control, mobility management, session management, user security authentication, and accounting. The 5G core network includes a plurality of functional units, and the functional units may be classified into a control plane functional entity and a data plane functional entity. An access and mobility management (Access and Mobility Management Function, AMF) unit is responsible for user access management, security authentication, and mobility management. A user plane unit (User Plane Unit, UPF) is responsible for user-plane data transmission, traffic statistics collection, and lawful interception. A session management (Session Management Function, SMF) unit is responsible for interacting with a separated data plane.

Ground station: A ground station is responsible for forwarding signaling and service data between a satellite base station and a 5G core network.

5G new radio: 5G new radio is a radio link between a terminal and a base station.

Xn interface: An Xn interface is an interface between a 5G base station and a base station, and is used for handover signaling exchange and the like.

NG interface: An NG interface is an interface between a 5G base station and a 5G core network.

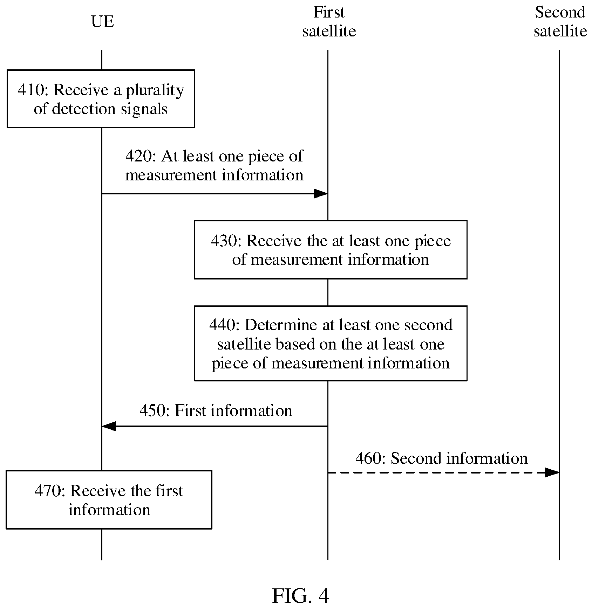

FIG. 4 is an interaction flowchart of a satellite communication method 400 according to this embodiment.

A satellite network is divided into several hypercells based on geographical areas, and user equipment in each hypercell has a unique user identifier.

410: User equipment (UE) receives a plurality of detection signals, where the plurality of detection signals are in a one-to-one correspondence with a plurality of satellites, and each detection signal is periodically sent by a corresponding satellite in a broadcast manner.

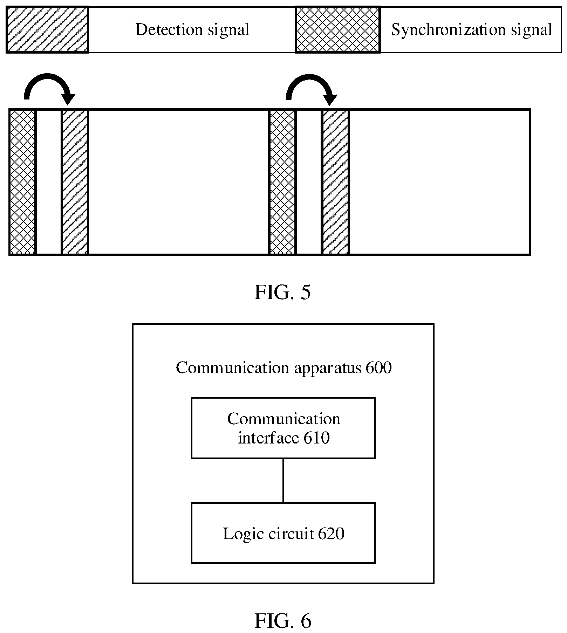

The detection signal may be a beacon signal, and the beacon signal may be a group of sequences. Beacon signals sent by satellites in a hypercell are different from each other. In other words, each beacon signal is in a one-to-one correspondence with each satellite. The beacon signal may have a determined time sequence relationship with a downlink synchronization (sync) signal of a satellite, so that a user can detect the beacon signal. FIG. 5 is a schematic diagram in which a detection signal and a synchronization signal have a determined time sequence relationship.

420: The UE sends at least one piece of measurement information to a first satellite, where the at least one piece of measurement information is in a one-to-one correspondence with at least one first detection signal, and each piece of measurement information indicates signal quality of a corresponding first detection signal. Each detection signal is corresponding to one piece of measurement information. The UE may send a plurality of pieces of measurement information together to the first satellite, or may separately send the plurality of pieces of measurement information to the first satellite. It should be understood that the first satellite is an anchor satellite that establishes a communication connection to the UE.

The UE may select, by detecting downlink beacon signals from a plurality of satellites, a satellite with best signal quality as the anchor satellite, the UE may initiate a random access process to the anchor satellite, and the anchor satellite allocates a user identifier to the UE.

Optionally, a quantity of first detection signals sent by the UE to the first satellite may specifically be the same as a quantity of a plurality of detection signals received by the UE. In other words, the UE may send, to the first satellite, measurement information corresponding to all received detection signals.

Optionally, the first detection signal may specifically be a detection signal whose signal quality meets a second preset condition in the plurality of detection signals received by the UE. The quantity of first detection signals sent by the UE to the first satellite may be less than the quantity of the plurality of detection signals received by the UE, and only measurement information corresponding to a detection signal whose signal quality meets a specific condition is sent to the first satellite. The second preset condition may be that receive power is greater than or equal to a third threshold; and/or a signal-to-noise ratio is greater than or equal to a fourth threshold. The UE may send all measurement information of detection signals whose signal quality meet the second preset condition to the first satellite, or may send measurement information of a detection signal whose signal quality is improved or degraded to meet the second preset condition to the first satellite. For example, in a first time period, the UE sends, to the first satellite, measurement information of detection signals that are from a satellite 1, a satellite 2, and a satellite 3 and whose signal quality meets the second preset condition. In a second time period, the UE sends, to the first satellite, only newly added measurement information of a detection signal that is from a satellite 4 and whose signal quality meets the second preset condition. Alternatively, the UE sends, to the first satellite, only measurement information of a detection signal that is from the satellite 1 and whose signal quality no longer meets the second preset condition. Only the measurement information of a detection signal whose signal quality is improved or degraded to meet the second preset condition is sent to the first satellite, to reduce overheads required for sending the measurement information.

430: The first satellite receives the at least one piece of measurement information sent by the user equipment UE.

440: The first satellite determines at least one second satellite in the at least one satellite based on the at least one piece of measurement information, where signal quality of a detection signal sent by the second satellite meets a first preset condition. It should be understood that the first preset condition may be that receive power is greater than or equal to a first threshold, and/or a signal-to-noise ratio is greater than or equal to a second threshold. The second satellite belongs to a cooperative satellite set of the UE. The second satellite may be a satellite in a same orbit as the UE, may be a satellite in a different orbit, may be another space-based platform including an uncrewed aerial vehicle or a hot air balloon, or may be a ground station.

Optionally, in an implementation, the first satellite determines, as the second satellite, a satellite corresponding to a detection signal whose signal quality meets the first preset condition and whose measurement information is received by the first satellite. Alternatively, the first satellite may determine, as the second satellite, satellites corresponding to all received detection signals. This is not limited in this embodiment of this application.

Optionally, in another implementation, the first satellite determines the at least one second satellite from the at least one satellite based on the at least one piece of measurement information and at least one piece of the following information. The at least one piece of information includes: load information of each satellite of the at least one satellite, an ephemeris of each satellite of the at least one satellite, top-crossing time information of each satellite of the at least one satellite relative to the UE, and location information of each satellite of the at least one satellite relative to the UE. In other words, when the first satellite determines the second satellite, the first satellite not only needs to consider whether signal quality of a detection signal meets the first preset condition, but also needs to consider a load of a satellite that sends the detection signal, an ephemeris of the satellite that sends the detection signal, top-crossing time information of the satellite that sends the detection signal relative to the UE, or location information of the satellite that sends the detection signal relative to the UE.

For example, signal quality of detection signals sent by the satellite 1 and the satellite 2 all meet the first preset condition. However, a load of the satellite 1 is large, and a load of the satellite 2 is small. In this case, the first satellite preferably selects the satellite 2 as the second satellite, to balance loads of the satellites. For another example, signal quality of detection signals sent by the satellite 3 and the satellite 4 all meet the first preset condition. However, top-crossing time of the satellite 3 relative to the UE is long, and top-crossing time of the satellite 4 relative to the UE is short. In this case, time at which the satellite may provide radio resource scheduling for the UE is considered, and only the satellite 3 may be determined as the second satellite. The time at which the satellite may provide radio resource scheduling for the UE may also be determined based on the ephemeris of the satellite that sends the detection signal and the location information relative to the UE.

450: The first satellite sends first information to the UE, where the first information is used for communication between the UE and the second satellite, and the first information includes an identifier of the second satellite. To be specific, optionally, the first information may be used for synchronization or authentication and authorization between the second satellite and the UE.

The first satellite may send, to the UE over a satellite-to-ground link, related information about authentication and authorization between the second satellite and the UE, and/or the first satellite may send, to the UE over the satellite-to-ground link, related information about synchronization between the second satellite and the UE.

460: The first satellite sends second information to the second satellite, where the second information is used for communication between the second satellite and the UE, and the second information includes an identifier of the UE. The second satellite receives the second information sent by the first satellite.

To be specific, optionally, the second information may also be used for synchronization or authentication and authorization between the second satellite and the UE.

It should be understood that the first satellite sends the first information to the UE, and/or the first satellite sends the second information to the second satellite. The first satellite may send, to either a UE side or a second satellite side, information used for communication between the UE and the second satellite, or may send, to both of the UE side and the second satellite side, the information used for communication between the UE and the second satellite.

470: The UE receives the first information sent by the first satellite.

The UE may prepare in advance for establishing a communication connection based on information that is sent by the first satellite and that is used for communication between the UE and the second satellite. The second satellite is synchronized with the UE, the second satellite completes authentication and authorization with the UE, or the second satellite is synchronized with the UE and completes authentication and authorization.

The second satellite receives the second information sent by the first satellite, and prepares for establishing a communication connection to the UE based on the second information.

Optionally, the first satellite may further send third information to a third satellite, where the third information indicates a first time-frequency resource used when the first satellite communicates with the UE, so that the second satellite communicates with the UE by using the first time-frequency resource. It should be understood that the first time-frequency resource may be determined by the first satellite based on a time-frequency resource status of the first satellite, or may be determined based on a time-frequency resource status of the second satellite.

To be specific, optionally, the first satellite receives fourth information sent by the second satellite, where the fourth information indicates an idle time-frequency resource of the second satellite, so that the first satellite determines the first time-frequency resource from the idle time-frequency resource. The second satellite may send the fourth information to the first satellite by using an inter-satellite link.

The second satellite receives the third information sent by the first satellite, may communicate with the UE by using the first time-frequency resource, and send, to the UE, data that is the same as data sent by the first satellite to the UE. Alternatively, the second satellite may communicate with the UE by using a resource other than the first time-frequency resource, and send, to the UE, data that is different from the data sent by the first satellite to the UE. If the second satellite sends, to the UE by using the first time-frequency resource, the data that is the same as the data sent by the first satellite to the UE, the UE may be handed over from the first satellite to the second satellite without being perceived.

Optionally, the at least one second satellite is determined in a first time period, the second satellite belongs to a cooperative satellite set of the UE, and the first information and/or the second information are/is used for communication between the UE and each satellite in the cooperative satellite set, and the method further includes the following.

In a second time period, if signal quality of a detection signal sent by a third satellite other than the cooperative satellite set meets the first preset condition, the first satellite adds the third satellite to the cooperative satellite set. In other words, the first satellite determines the third satellite as the second satellite.

In a third time period, if signal quality of a detection signal sent by a fourth satellite in the cooperative satellite set does not meet the first preset condition, the first satellite excludes the fourth satellite from the cooperative satellite set. In other words, the fourth satellite is no longer determined as the second satellite.

Optionally, the UE continuously receives detection signals from a plurality of satellites. If it is determined that signal quality of a detection signal sent by the second satellite is the best, the second satellite may be determined as the anchor satellite, so that the first satellite becomes a cooperative satellite.

In the technical solution provided in this embodiment of this application, the first satellite that establishes a connection to the UE may determine, based on the measurement information detected by the UE, the at least one second satellite whose signal quality meets the first preset condition, and enable the at least one second satellite to prepare in advance for communication with the UE. When the UE initiates a random access request to the second satellite, a connection may be quickly established, and a delay may be reduced.

An embodiment of this application provides a communication apparatus 600. FIG. 6 is a schematic block diagram of the communication apparatus 600 according to an embodiment of this application. The communication apparatus 600 includes:
a communication interface 610, configured to receive at least one piece of measurement information sent by user equipment UE, where the at least one piece of measurement information is in a one-to-one correspondence with at least one satellite, and each piece of measurement information indicates signal quality of a detection signal sent by a corresponding satellite; and
a logic circuit 620, configured to determine at least one second satellite from the at least one satellite based on the at least one piece of measurement information, where signal quality of a detection signal sent by the second satellite meets a first preset condition.

The communication interface 610 is further configured to send first information to the UE, where the first information is used for communication between the UE and the second satellite, and the first information includes an identifier of the second satellite.

The communication interface 610 is further configured to send second information to the second satellite, where the second information is used for communication between the second satellite and the UE, and the second information includes an identifier of the UE.

Optionally, the first information or the second information is specifically used for synchronization or authentication and authorization between the second satellite and the UE.

Optionally, the first preset condition includes: Receive power is greater than or equal to a first threshold; and/or a signal-to-noise ratio is greater than or equal to a second threshold.

Optionally, the logic circuit 620 is specifically configured to determine the at least one second satellite from the at least one satellite based on the at least one piece of measurement information and at least one piece of the following information:
load information of each satellite of the at least one satellite, an ephemeris of each satellite of the at least one satellite, top-crossing time information of each satellite of the at least one satellite relative to the UE, and location information of each satellite of the at least one satellite relative to the UE.

Optionally, the communication interface 610 is further configured to send third information to the second satellite, where the third information indicates a first time-frequency resource used when the communication interface communicates with the UE.

Optionally, the communication interface 610 is further configured to receive fourth information sent by the second satellite, where the fourth information indicates an idle time-frequency resource of the second satellite. The logic circuit 620 is further configured to determine the first time-frequency resource from the idle time-frequency resource.

Optionally, the at least one second satellite is determined in a first time period, the second satellite belongs to a cooperative satellite set of the UE, and the first information and/or the second information are/is used for communication between the UE and each satellite in the cooperative satellite set.

In a second time period, if signal quality of a detection signal sent by a third satellite other than the cooperative satellite set meets the first preset condition, the logic circuit is further configured to add the third satellite to the cooperative satellite set.

In a second time period, if signal quality of a detection signal sent by a fourth satellite in the cooperative satellite set does not meet the first preset condition, the logic circuit is further configured to exclude the fourth satellite from the cooperative satellite set.

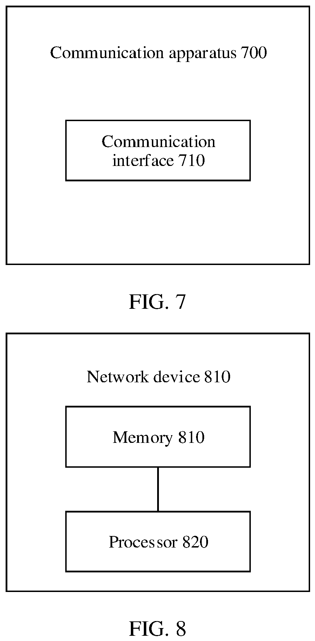

An embodiment of this application provides another communication apparatus 700. FIG. 7 is a schematic block diagram of the another communication apparatus 700 according to an embodiment of this application. The communication apparatus 700 includes:
a communication interface 710, configured to receive a plurality of detection signals, where the plurality of detection signals are in a one-to-one correspondence with a plurality of satellites, and each detection signal is sent by a corresponding satellite.

The communication interface 710 is further configured to send at least one piece of measurement information to a first satellite, where the at least one piece of measurement information is in a one-to-one correspondence with at least one first detection signal, and each piece of measurement information indicates signal quality of a corresponding first detection signal.

The communication interface 710 is further configured to receive first information sent by the first satellite, where the first information includes an identifier of a second satellite, the first information is used for communication between UE and the second satellite, and signal quality of a first detection signal sent by the second satellite meets a first preset condition.

Optionally, the first information is specifically used for synchronization or authentication and authorization between the second satellite and the UE.

Optionally, a quantity of the first detection signals is the same as a quantity of the plurality of detection signals.

Optionally, the first detection signal is a detection signal whose signal quality meets a second preset condition in the plurality of detection signals.

Optionally, the second preset condition includes: Receive power is greater than or equal to a third threshold; and/or a signal-to-noise ratio is greater than or equal to a fourth threshold.

An embodiment of this application provides a network device 800. FIG. 8 is a schematic block diagram of the network device according to an embodiment of this application. The network device 800 includes:
a memory 810, configured to store executable instructions; and
a processor 820, configured to invoke and run the executable instructions in the memory 810, to implement the method in embodiments of this application.

The foregoing processor may be an integrated circuit chip, and has a signal processing capability. In an implementation process, steps in the foregoing method embodiments may be implemented by using a hardware integrated logic circuit in the processor, or by using instructions in a form of software. The processor may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in a decoding processor. A software module may be located in a mature storage medium in the art, such as a random access memory, a flash memory, a read-only memory, a programmable read-only memory, an electrically erasable programmable memory, a register, or the like. The storage medium is located in the memory, and the processor reads information in the memory and completes the steps in the foregoing methods in combination with hardware of the processor.

The foregoing memory may be a volatile memory or a non-volatile memory, or may include both of a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be understood that the memory may be integrated into the processor, the processor and the memory may be integrated into a same chip, or may be separately located on different chips and connected in an interface coupling manner. This is not limited in this embodiment of this application.

An embodiment of this application further provides a computer-readable storage medium. The computer-readable storage medium stores a computer program used to implement the methods in the foregoing method embodiments. When the computer program runs on a computer, the computer is enabled to implement the methods in the foregoing method embodiments.

In addition, the term "and/or" in this application merely indicates an association relationship for describing associated objects, and indicates that three relationships may exist. For example, A and/or B may indicate the following three cases: Only A exists, both A and B exist, and only B exists. In addition, the character "/" in this specification generally indicates that the associated objects are in an "or" relationship. In this application, the term "at least one" may indicate "one" and "two or more". For example, at least one of A, B, and C may indicate the following seven cases: Only A exists, only B exists, only C exists, both A and B exist, both A and C exist, both C and B exist, A, B, and C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application, but such implementation should not be considered beyond the scope of this application.

A person skilled in the art may clearly learn that, for the purpose of convenient and brief description, for a specific working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing description is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, comprising:
receiving, by a first satellite, at least one piece of measurement information sent by user equipment UE, wherein the at least one piece of measurement information is in a one-to-one correspondence with at least one satellite, and each piece of measurement information indicates signal quality of a detection signal sent by a corresponding satellite;
determining, by the first satellite, at least one second satellite from the at least one satellite based on the at least one piece of measurement information, wherein signal quality of a detection signal sent by the second satellite meets a first preset condition;
sending, by the first satellite, first information to the UE, wherein the first information is used for communication between the UE and the second satellite, and the first information comprises an identifier of the second satellite; and/or
sending, by the first satellite, second information to the second satellite, wherein the second information is used for communication between the second satellite and the UE, and the second information comprises an identifier of the UE.

2. The method according to claim 1, wherein the first information or the second information is specifically used for synchronization or authentication and authorization between the second satellite and the UE.

3. The method according to claim 1 or 2, wherein the first preset condition comprises:
receive power is greater than or equal to a first threshold; and/or
a signal-to-noise ratio is greater than or equal to a second threshold.

4. The method according to any one of claims 1 to 3, wherein the determining, by the first satellite, at least one second satellite from the at least one satellite based on the at least one piece of measurement information comprises:
determining, by the first satellite, the at least one second satellite from the at least one satellite based on the at least one piece of measurement information and at least one piece of the following information:
load information of each satellite of the at least one satellite, an ephemeris of each satellite of the at least one satellite, top-crossing time information of each satellite of the at least one satellite relative to the UE, and location information of each satellite of the at least one satellite relative to the UE.

5. The method according to any one of claims 1 to 4, wherein the method further comprises:
sending, by the first satellite, third information to the second satellite, wherein the third information indicates a first time-frequency resource used when the first satellite communicates with the UE.

6. The method according to claim 5, wherein the method further comprises:
receiving, by the first satellite, fourth information sent by the second satellite, wherein the fourth information indicates an idle time-frequency resource of the second satellite; and
determining, by the first satellite, the first time-frequency resource from the idle time-frequency resource.

7. The method according to any one of claims 1 to 6, wherein the at least one second satellite is determined in a first time period, the second satellite belongs to a cooperative satellite set of the UE, and the first information and/or the second information are/is used for communication between the UE and each satellite in the cooperative satellite set, and
the method further comprises:
in a second time period, if signal quality of a detection signal sent by a third satellite other than the cooperative satellite set meets the first preset condition, adding, by the first satellite, the third satellite to the cooperative satellite set; and
in a third time period, if signal quality of a detection signal sent by a fourth satellite in the cooperative satellite set does not meet the first preset condition, excluding, by the first satellite, the fourth satellite from the cooperative satellite set.

8. A satellite communication method, comprising:
receiving, by user equipment UE, a plurality of detection signals, wherein the plurality of detection signals are in a one-to-one correspondence with a plurality of satellites, and each detection signal is sent by a corresponding satellite;
sending, by the UE, at least one piece of measurement information to a first satellite, wherein the at least one piece of measurement information is in a one-to-one correspondence with at least one first detection signal, and each piece of measurement information indicates signal quality of a corresponding first detection signal; and
receiving, by the UE, first information sent by the first satellite, wherein the first information comprises an identifier of a second satellite, the first information is used for communication between the UE and the second satellite, and signal quality of a first detection signal sent by the second satellite meets a first preset condition.

9. The method according to claim 8, wherein the first information is specifically used for synchronization or authentication and authorization between the second satellite and the UE.

10. The method according to claim 8 or 9, wherein a quantity of the first detection signals is the same as a quantity of the plurality of detection signals.

11. The method according to claim 8 or 9, wherein the first detection signal is a detection signal whose signal quality meets a second preset condition in the plurality of detection signals.

12. The method according to claim 11, wherein the second preset condition comprises:
receive power is greater than or equal to a third threshold; and/or
a signal-to-noise ratio is greater than or equal to a fourth threshold.

13. A satellite communication method, comprising:
sending, by a second satellite, a detection signal to user equipment UE; and receiving, by the second satellite, second information sent by a first satellite, wherein the second information is used for communication between the second satellite and the UE, the second information comprises an identifier of the UE, and the second information is sent by the first satellite after the first satellite determines that signal quality of the detection signal sent by the second satellite meets a first preset condition.

14. The method according to claim 13, further comprising:
receiving, by the second satellite, third information sent by the first satellite, wherein the third information indicates a first time-frequency resource used when the first satellite communicates with the UE; and communicating, by the second satellite, with the UE by using the first time-frequency resource.

15. The method according to claim 13, further comprising:
sending, by the second satellite, fourth information to the first satellite, wherein the fourth information indicates an idle time-frequency resource of the second satellite, so that the first satellite determines the first time-frequency resource from the idle time-frequency resource.

16. A communication apparatus, comprising:
a communication interface, configured to receive at least one piece of measurement information sent by user equipment UE, wherein the at least one piece of measurement information is in a one-to-one correspondence with at least one satellite, and each piece of measurement information indicates signal quality of a detection signal sent by a corresponding satellite; and
a logic circuit, configured to determine at least one second satellite from the at least one satellite based on the at least one piece of measurement information, wherein signal quality of a detection signal sent by the second satellite meets a first preset condition;
the communication interface is further configured to send first information to the UE, wherein the first information is used for communication between the UE and the second satellite, and the first information comprises an identifier of the second satellite; and/or
the communication interface is further configured to send second information to the second satellite, wherein the second information is used for communication between the second satellite and the UE, and the second information comprises an identifier of the UE.

17. The apparatus according to claim 16, wherein the first information or the second information is specifically used for synchronization or authentication and authorization between the second satellite and the UE.

18. The apparatus according to claim 16 or 17, wherein the first preset condition comprises:
receive power is greater than or equal to a first threshold; and/or
a signal-to-noise ratio is greater than or equal to a second threshold.

19. The apparatus according to any one of claims 16 to 18, wherein the logic circuit is specifically configured to determine the at least one second satellite from the at least one satellite based on the at least one piece of measurement information and at least one piece of the following information:
load information of each satellite of the at least one satellite, an ephemeris of each satellite of the at least one satellite, top-crossing time information of each satellite of the at least one satellite relative to the UE, and location information of each satellite of the at least one satellite relative to the UE.

20. The apparatus according to any one of claims 16 to 19, wherein the communication interface is further configured to send third information to the second satellite, wherein the third information indicates a first time-frequency resource used when the communication interface communicates with the UE.

21. The apparatus according to claim 20, wherein
the communication interface is further configured to receive fourth information sent by the second satellite, wherein the fourth information indicates an idle time-frequency resource of the second satellite; and
the logic circuit is further configured to determine the first time-frequency resource from the idle time-frequency resource.

22. The apparatus according to any one of claims 16 to 21, wherein the at least one second satellite is determined in a first time period, the second satellite belongs to a cooperative satellite set of the UE, and the first information and/or the second information are/is used for communication between the UE and each satellite in the cooperative satellite set;
in a second time period, if signal quality of a detection signal sent by a third satellite other than the cooperative satellite set meets the first preset condition, the logic circuit is further configured to add the third satellite to the cooperative satellite set; and
in the second time period, if signal quality of a detection signal sent by a fourth satellite in the cooperative satellite set does not meet the first preset condition, the logic circuit is further configured to exclude the fourth satellite from the cooperative satellite set.

23. A communication apparatus, comprising:
a communication interface, configured to receive a plurality of detection signals, wherein the plurality of detection signals are in a one-to-one correspondence with a plurality of satellites, and each detection signal is sent by a corresponding satellite;
the communication interface is further configured to send at least one piece of measurement information to a first satellite, wherein the at least one piece of measurement information is in a one-to-one correspondence with at least one first detection signal, and each piece of measurement information indicates signal quality of a corresponding first detection signal; and
the communication interface is further configured to receive first information sent by the first satellite, wherein the first information comprises an identifier of a second satellite, the first information is used for communication between UE and the second satellite, and signal quality of a first detection signal sent by the second satellite meets a first preset condition.

24. The apparatus according to claim 23, wherein the first information is specifically used for synchronization or authentication and authorization between the second satellite and the UE.

25. The apparatus according to claim 23 or 24, wherein a quantity of the first detection signals is the same as a quantity of the plurality of detection signals.

26. The apparatus according to claim 23 or 24, wherein the first detection signal is a detection signal whose signal quality meets a second preset condition in the plurality of detection signals.

27. The apparatus according to claim 26, wherein the second preset condition comprises:
receive power is greater than or equal to a third threshold; and/or
signal-to-noise ratio is greater than or equal to a fourth threshold.

28. A communication apparatus, comprising a processor and a memory, wherein the memory is coupled to the processor, the memory is configured to store a computer program or instructions, and the processor is configured to run the computer program or the instructions, to implement the method according to any one of claims 1 to 7, perform the method according to any one of claims 8 to 12, or perform the method according to any one of claims 13 to 15.

29. A computer-readable storage medium, wherein
the computer-readable medium stores a computer program; and
when the computer program runs on a computer, the computer is enabled to perform the method according to any one of claims 1 to 7.

30. A computer-readable storage medium, wherein
the computer-readable medium stores a computer program; and
when the computer program runs on a computer, the computer is enabled to perform the method according to any one of claims 8 to 12.

31. A computer-readable storage medium, wherein
the computer-readable medium stores a computer program; and
when the computer program runs on a computer, the computer is enabled to perform the method according to any one of claims 13 to 15.
